# EUROPEAN PATENT SPECIFICATION

(11) **EP 1 120 561 B1**
(45) Date of publication and mention of the grant of the patent: **03.08.2005**
(21) Application number: 00127306.9
(22) Date of filing: 13.12.2000
(51) Int. Cl.: F02M 21/02, G05D 16/06

(54) **Two-stage pressure regulator for feeding internal combustion engines with gaseous fuel at constant pressure**
Zweistufiger Druckregler für die Zuführung eines Gases unter konstantem Druck zu einer Brennkraftmaschine
Régulateur de pression à deux étages pour alimenter un moteur à combustion en gaz à pression constante

(30) Priority: 27.01.2000 IT MI000109
(43) Date of publication of application: 01.08.2001
(73) Proprietor: Landi Renzo S.p.A., 42025 Corte Tegge, Cavriago (Reggio Emilia) (IT)
(72) Inventor: Landi, Stefano, 42100 Reggio Emilia (IT)
(74) Representative: Giambrocono, Alfonso, Dr. Ing.

(56) References cited:
- EP-A- 0 026 017
- EP-A- 0 919 898
- DE-A- 3 624 720
- US-A- 2 226 761
- US-A- 2 940 462
- US-A- 4 434 774
- PATENT ABSTRACTS OF JAPAN vol. 010, no. 193 (M-496), 8 July 1986 (1986-07-08) & JP 61 038149 A (NIPPON CARBURETER CO LTD), 24 February 1986 (1986-02-24)

## Description

This invention relates to a pressure regulator for feeding an internal combustion engine with gaseous fuel taken from a relative tank.

As is a well known to the expert of the art, the pressure regulator is an essential element of an injection system for internal combustion engines fed with gaseous fuels. The pressure regulator must ensure delivery of the gaseous fuel in the quantity and at the pressure required. In particular it must:
- compensate the gradual variation which arises in the entry pressure to the pressure regulator as a consequence of the slow emptying of the fuel tank (the maximum pressure after its filling being for example 220 bar, and then gradually decreasing until the next filling);
- maintain the exit pressure from the pressure regulator constant both for gradual entry pressure variations from the aforestated value, and for sudden variations;
- block fuel delivery, in the manner of a shut-off valve, when there is no fuel requirement by the engine.

The sensitivity and precision of a pressure regulator are fundamental to the proper operation of the feed system of an injection-fed internal combustion engine, it being necessary to accurately meter the fuel to the engine.

So-called two-stage pressure regulators are known, comprising a first stage having a first chamber communicating with the gaseous fuel tank via a first valve, a part of the inner surface of the first chamber being formed by a first elastic membrane (or possibly by a piston) the outer side of which is at atmospheric pressure, on the first membrane there also acting a preset spring. The deformation of the first membrane controls the first valve by means of a coaxial rod, one end of which is fixed to the centre of the membrane whereas its other end is fixed to the valving element of the first valve, this enabling the fuel flow into the first chamber to the regulated, the valving element of the first valve moving into its open position in the opposite direction to that of the gaseous fuel stream entering through the first valve. The first chamber communicates with a second chamber, forming part of the second stage, via a second valve controlled (similarly to the first valve) by means of a second elastic membrane (or a second piston) forming a part of the inner surface of the second chamber. The second chamber is divided into two parts by a rigid baffle, the first part communicating directly with the exit from the pressure regulator and, via the second valve, with the first chamber. The outer side of the second elastic membrane is at atmospheric pressure, or is connected to the engine manifold (in which case the reducer is said to be compensated). A preset spring also acts on the second membrane. The two parts of the second chamber are connected together via a hole provided in the rigid baffle which divides it, and which in practice forms a venturi.

With the aforedescribed known two-stage pressure regulators a fuel exit pressure is obtained which for traditional engines is sufficiently constant while the pressure in the tank varies following its gradual emptying. However because of the requirements of modern injection engines and possible sudden flow variations due to sudden variations in the fuel requirement by the engine, the exit pressure of known two-stage pressure regulators is still too variable.

US 2 940 462 describes another kind of prior art pressure regulating valve.

An object of the present invention is to provide a two-stage pressure regulator which enables a gaseous fuel pressure to be obtained downstream which, for the purposes of the results obtained when using it to feed modern injection engines, can in practice be considered constant, this pressure varying in any event decidedly less than that which occurs when using known two-stage regulators, both in the case of sudden variations in the fuel requirement by the engine and in the case of gradual tank emptying.

A further object is to provide a pressure reducer of the aforedescribed type which is particularly compact, i.e. of less overall size than that of known two-stage pressure regulators.

The initial aforestated object is attained by the two-stage pressure regulator of the present invention, characterised in that the connection between the two parts of the second chamber is made by a tube which extends from the wall dividing said two parts to a position corresponding with the circular exit aperture of the regulator, the relative free end of the tube having an outer diameter less than the inner diameter of the exit aperture; the first valve opening in the fuel flow direction, whereas the second valve opens in the opposite direction to the fuel flow.

The connection between the two parts of the second chamber is therefore not made, as in known two-stage pressure regulators, by means of a single small hole in the wall dividing these two parts, but by means of said tube the free end of which reaches a position corresponding with the aperture from which the gaseous fuel leaves the pressure regulators, so significantly contracting its free area, to produce a venturi effect. Moreover the particular manner of opening the two said valves further contributes to stabilisation of the exit pressure from the pressure reducer.

It has been verified that an even sudden increase in the inner diameter of said tube towards its free end contributes to further improving the stabilisation of the exit pressure.

To attain the second aforesaid object, in the pressure regulator of the invention the first and second membrane are disposed superposed and lying in respective substantially parallel planes, with the first and the second chamber disposed in the space between the planes of the two membranes, the relative preset elastic means being disposed outside these planes, the first valve having its valving element movable in a direction substantially parallel to the planes of the two membranes and lying within the space between these two planes.

By virtue of the these latter characteristics a truly compact pressure regulator is obtained, as will be seen hereinafter.

The invention will be more apparent from the description of one embodiment thereof given hereinafter. In this description reference is made to the accompanying drawings, in which:
Figure 1 is and isometric view of a pressure regulator according to the invention, with some accessories;
Figure 2 is a vertical section therethrough on the line 2-2 of Figure 1; and
Figure 3 is a vertical section therethrough on the line 3-3 of Figure 1.

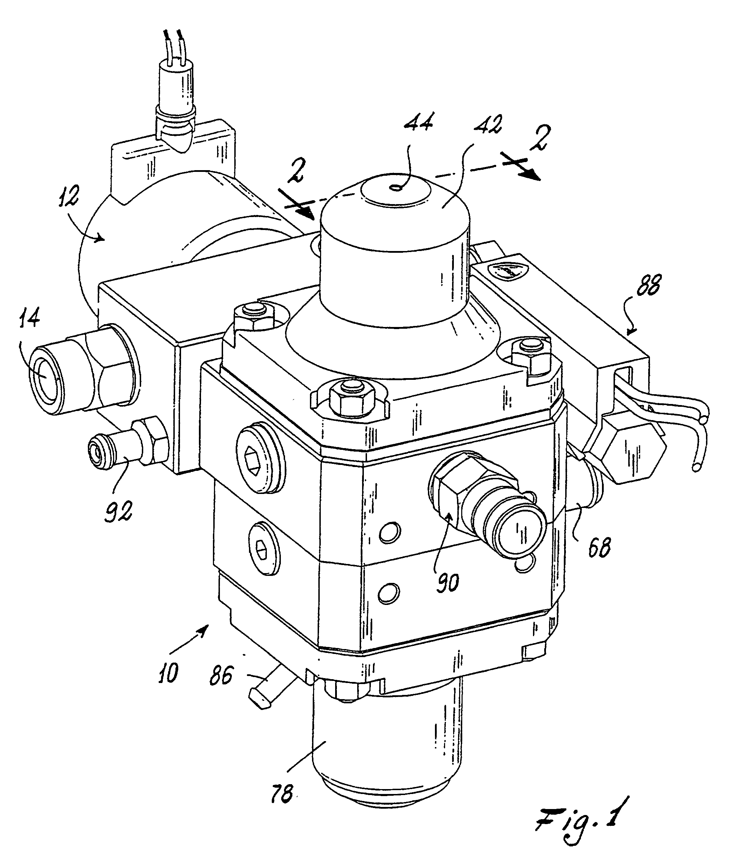

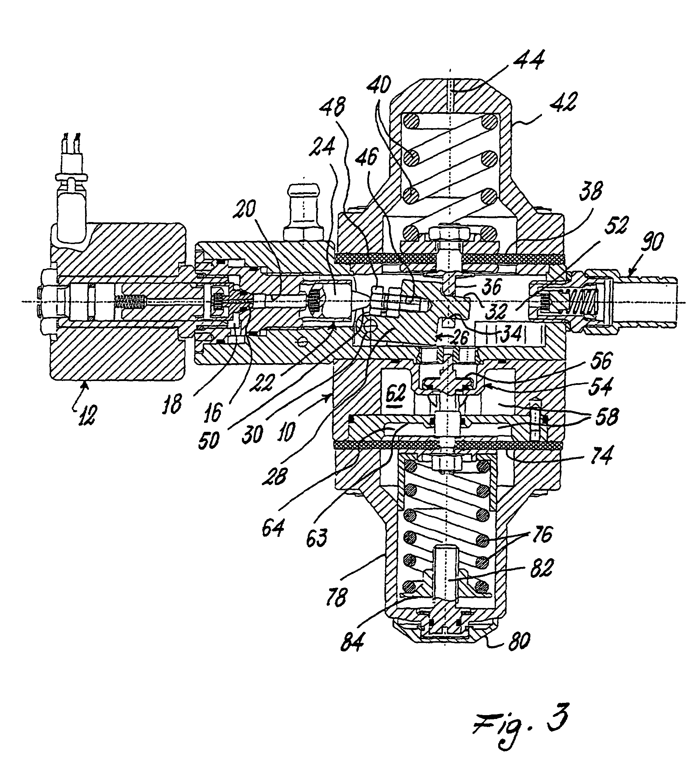

As can be seen from Figures 1 and 3, to the two-stage pressure regulator there is applied a conventional solenoid valve 12 which enables the gaseous fuel feed to the pressure regulator to be interrupted and restored. The fuel is contained under pressure in a suitable tank (not shown). The feed takes place through an inlet nozzle indicated by 14 in Figure 1. The solenoid valve 12 is in this specific case partially pilot-operated (for the reasons which will be stated hereinafter). It is shown in Figure 3 in its closed state (fuel is not fed to the pressure regulator 10), the valving element 16 of the solenoid valve 12 interrupting communication between the annular space 18, connected to the inlet nozzle 14, and the channel 20 of the regulator 10, the valving element 16 being able to close the mouth of the channel 20. The other end of the channel 20 can be closed by a first valve 22 of the regulator 10, the valving element 24 of which, when the valve 22 is closed, is urged against the exit of the channel 20.

As can be seen from Figure 3, the valving element 24 of the valve 22 is controlled by an adjustable lever system indicated overall by 26 and comprising a connecting rod 28 which can rotate about a pin 30 fixed to the body of the regulator 10. The connecting rod 28 has a shank 32 which is inserted into a corresponding hole 34 provided in a connection element 36 one end of which is fixed to the centre of a first elastic membrane 38. Although the shank 32 is retained in the hole 34 of the connection element 36 it can however rotate through a determined angle about this latter.

On the other side of the elastic membrane 28 there acts an elastic spring 40 enclosed in a cylindrical cover 42 in which atmospheric pressure is present by virtue of the fact that a coaxial hole 44 is provided therein communicating with the outside.

The connecting rod 28 has a threaded dead hole 46 into which a screw 48 is screwed, the head of which makes contact with a projection 50 extending from the valving element 24 of the first valve 22. The opening of the valve 22 can be adjusted by screwing the screw 48 into the hole 46 to a greater or lesser extent.

The lever system 26 is enclosed in a first chamber 52 bounded partly by the elastic membrane 38. The periphery of this latter is clamped between the cover 42 and body of the regulator 10.

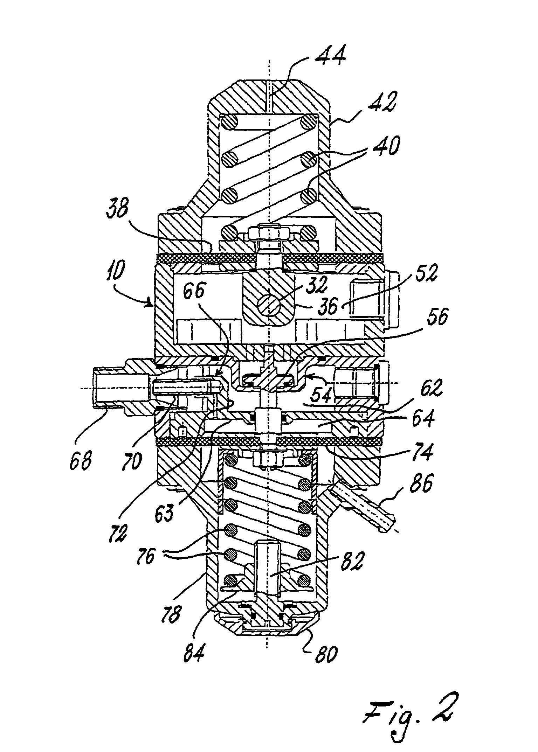

On the opposite side of the first chamber 52, coaxial with the first membrane 38 and relative spring 40, there is provided a second valve 54 (in Figure 3 shown in its closed state) the valving element 56 of which can close the communication between the first chamber 52 and a second chamber 58. This latter is divided by a rigid baffle 60 into two parts, indicated respectively by 62 and 64. As can be seen in Figure 2, the two parts 62 and 64 of the second chamber 58 are connected together via a tube 66 the free end of which is in a position corresponding with the exit nozzle 68 of the regulator 10. The tube 66 consists of two portions, the first portion 70 of which is rectilinear and coaxial with the exit nozzle 68 and has an outer diameter less than the inner diameter of the exit nozzle 68 (this enabling the venturi effect to be obtained on the gaseous fuel leaving the regulator 10) and a determined inner diameter. The second portion 72 of the inner tube 66 has an inner diameter decidedly less than that of the first portion 70. The variation in the inner diameter of the tube 66 forms in practice a second venturi.

The second chamber 58 has a wall part formed by a second elastic membrane 74 to the centre of which there is fixed a coaxial pin carrying the valving element 56 for the second valve 54. On the other side of the membrane 74 their acts a second preset coaxial helical spring 76 contained in a relative cylindrical cover 78 the interior of which communicates via the nozzle 86 with the engine manifold (not shown) (to hence obtain the aforesaid compensation).

The action which the second spring 76 exerts on the second membrane 74 can be adjusted, after removing the cap 80, by a coaxial screw 82 on which there is screwed a threaded washer 84 on which the outer end of the spring 76 rests.

From Figure 1 it can be seen that a pressure transducer 88 is applied to the pressure regulator 10. The pressure regulator 10 is also provided with a conventional safety valve 90 which, if overpressure exceeds a predetermined safety value, connects the first chamber 52 to the outside.

In order to prevent the formation of condensate and/or ice in the pressure reducer 10 - due to cooling of the expanding fuel (Joule-Thompson effect) - a conventional heating circuit is provided (which, not forming part of the present invention, is not shown except for a connection nozzle 92 visible in Figure 1) which normally uses the engine cooling liquid. The heating circuit is obviously positioned as close as possible to that region of the reducer involving the greatest pressure drop to allow more efficient heat transfer. To prevent the gaseous fuel attaining too high a temperature, this circuit can be regulated by conventional thermostatic valves which, as is well known, are available in two versions:
- wax version, which is operated by the temperature of the heating liquid leaving the pressure reducer;
- electronic version, which is regulated on the basis of the temperature of the gaseous fuel leaving the pressure reducer.

The operation of the aforedescribed pressure regulator 10 will now be briefly described.

Inside the pressure regulator 10, the annular space 18 (Figure 3) which communicates with the entry nozzle 14 (Figure 1), and hence with the tank, contains gaseous fuel at the same pressure as in the tank. If the solenoid valve 12 is energized, so that its valving element 16 does not close the mouth of the channel 20, gaseous fuel enters this channel at the same pressure as in the tank. Under the action of the relative pressure, the valving element 24 of the first valve 22 of the regulator 10 (Figure 3) moves towards the right (in the direction of the fuel flow), the extent of this movement of the valving element 24 being conditioned, via the lever system 26 and the first elastic membrane 38, by the set pressure determined by the spring 40 (it should be noted that atmospheric pressure is present in the cover 42). Consequently the membrane 38, subjected to the action of the spring 40, of the atmospheric pressure in the cover 42 and of the fuel pressure in the first chamber 52, assumes a relative equilibrium configuration corresponding to a determined open position of the valving element 24. As the pressure in the first chamber 52 decreases (for example due to an increase in the fuel requirement by the engine), the force of the spring 40 on the first membrane 38 prevails and causes this latter to deform downwards, which (by virtue of the lever system 26) is equivalent to further opening the first valve 22 (further movement towards the right of its valving element 24) with a consequent increase in the fuel flow rate and hence in the pressure in the first chamber 52, the membrane 38 hence again being in equilibrium.

In contrast, as the pressure in the first chamber 52 increases (to hence exceed the set pressure), the first membrane 38 deforms upwards, so that the valve 22 tends to close as a result of the movement of its valving element 24 towards the right, so decreasing the fuel flow rate.

The first chamber 52, the first valve 22, the lever system 26, the first membrane 38 and the spring 40 with its relative containing cover 42 together form the so-called first stage. The first stage operates on the so-called "blow open" principle, ie the first valve 22 tends to open because of the pressure difference between its inlet (18, 20) and the first chamber 52. If an excessive pressure increase occurs in the first chamber 52, the safety valve 90 operates to discharge to the outside, so returning the pressure to a value slightly higher than the set pressure.

The gaseous fuel then passes into the so-called second stage, and in particular into the second chamber 58, via the second valve 54, which instead is of the direct opening type with its opening direction opposite to that of the fuel flow.

When under delivery conditions the second valve 54 is open (the relative valving element 56 being moved upwards), so that in the second chamber 58 (Figure 3) a pressure arises corresponding to the set pressure because of the equilibrium of the forces exerted on the second elastic membrane 74 by the second spring 76 and by the fuel pressure in the said chamber 58.

As the pressure in the second chamber 58 decreases, the force of the second spring 76 prevails, causing the membrane 74 to deform upwards. This deformation acts directly on the second valve 54, to move the valving element 56 upwards and hence increase the opening of the valve 54. This generates an increase in the fuel flow rate and consequently a pressure increase in the second chamber 58, so restoring equilibrium.

In contrast, when the pressure in the second chamber 58 increases, the second valve 54 tends to close, causing the fuel flow rate and hence the pressure in the second chamber 58 to decrease.

As stated, the second chamber 58 is divided into two parts by a baffle 63, the first part 62 communicating with the second part 64 via the tube 66 in the form of two consecutive portions 70 and 72 of different diameter. The gas flow emerging through the exit nozzle 68 (about the free end of the tube 66, which hence significantly contracts the exit area) generates a venturi effect which produces in the second part 64 of the second chamber 58 a pressure less than that existing in the first part 62. This venturi effect increases as the fuel flow rate increases and enables pressure drops within the pressure reducer 10 to be compensated, these increasing with increasing flow rate. This results in an increase in the effect of the second spring 76 and, consequently, a greater opening of the second valve 54. The fact that the tube 66 has a smaller diameter in that portion thereof towards the second part 64 of the second chamber (this forming in practice a second venturi) emphasizes this effect.

The operating principle of of the second stage is of the "blow closed" type, i.e. the second valve tends to close because of the pressure difference between the first and second stage.

As already stated, to maintain the pressure drop through the injectors constant as the position of the engine throttle valve (not shown) varies, the second stage can be conveniently compensated (as it is in the illustrated example) by connecting the interior of the cover 78 to the engine intake manifold (not shown) by the connector 86. Again as already stated, the second stage is provided with a screw regulator device (80, 82, 84) which enables the pressure to be finely adjusted within a narrow range.

In conclusion, the advantages of the pressure reducer of the present invention can be usefully highlighted.

Firstly, the fact that the pressure reducer is in two stages results in:
- greater accuracy in regulating the pressure of the gaseous fuel;
- lesser influence of the fuel pressure in the tank.

Moreover the fact of having used elastic membranes (instead of pistons) for the pressure reducer results in:
- greater sensitivity of the relative valves;
- lesser hysteresis;
- lesser possibility of gas leakages (which, if pistons are used, can occur because of wear of the dynamic seal elements).

The combination of a first stage of "blow open" type with a second stage of "blow closed" type further contributes to stabilisation of the exit pressure from the pressure reducer, because in this manner the two stages are oppositely affected by the pressure upstream of them.

Separating the second stage (second chamber) into two parts enables:
- the venturi effect to be utilised through the contracted cross-section of the fuel exit nozzle of the pressure regulator;
- gaseous fuel to be prevented from directly striking the second membrane with a turbulent flow;
- the pressure waves caused by the injectors and propagating towards the second membrane to be damped, so allowing stable operation of the pressure reducer when mounted in the the injection system.

Moreover, by conveniently using a partially pilot-operated solenoid valve 12 instead of a completely pilot-operated solenoid valve, its opening (movement of the valving element 16 towards the right in Figure 3) is obtained not only by mechanical effect, but also by pneumatic effect, this enabling quick opening times to be obtained both with high and with low fuel pressure upstream of the solenoid valve.

Finally, if second stage compensation is provided (i.e. connection of the interior of the cover 78 to the engine manifold via the nozzle 86), this enables the pressure drop through the injectors to be maintained constant as the position of the engine throttle valve varies.

## Claims

1. A two-stage pressure regulator (10) for feeding an internal combustion engine of injection type with gaseous fuel taken from a relative tank, in which the first stage comprises a first chamber (52) communicating with the tank via a first valve (22), a part of the inner surface of the first chamber (52) being formed by a first elastic membrane (38) the outer side of which is at atmospheric pressure, on the first membrane (38) there acting a first preset elastic means (40), means (36, 32, 28, 30, 46, 48, 50) being provided to control the first valve (22) by the deformation of the first membrane (38); the second stage comprising a second chamber (58) which communicates with the first chamber (52) via a second valve (54), a part of the inner surface of the second chamber (58) being formed by a second elastic membrane (74) on which a second preset elastic means (76) acts, the second chamber being divided into two parts, of which the first part (62) communicates directly with the exit (68) of the regulator (10) and also, via the second valve (54), with the first chamber (52), the second part (64) of the second chamber (58) being partly bounded by the second elastic membrane (74), the two parts (62, 64) of the second chamber (58) being connected together, **characterised in that** the connection between the two parts (62, 64) of the second chamber (58) is made by a tube (66) which extends from the wall (63) by which said two parts (62, 64) are divided, to a position corresponding with the circular exit aperture (68) of the regulator (10), the relative free end of the tube (66) having an outer diameter less than the inner diameter of the exit aperture (68); the first valve (22) opening in the fuel flow direction, whereas the second valve (54) opens in the opposite direction to the fuel flow.

2. A pressure regulator as claimed in claim 1, wherein the inner diameter of the tube (66) increases towards its free end.

3. A pressure regulator as claimed in claim 2, wherein the increase in the inner diameter of the tube (66) occurs suddenly in an intermediate point thereof.

4. A pressure regulator (10) as claimed in claim 1, wherein the first (38) and the second (74) membrane are disposed superposed and lie in respective substantially parallel planes, with the first (52) and the second (54) chamber disposed within the space between the planes of the two membranes (38, 74), the relative preset elastic means (40, 76) being disposed outside these planes, the first valve (22) having its valving element movable in a direction substantially parallel to the planes of the two membranes (38, 74) and lying within the space between said two planes.

5. A pressure regulator (10) as claimed in claims 1 and 4, wherein the means for controlling the first valve (22) by the deformation of the first elastic membrane (38) comprise a lever system (36, 32, 28, 30, 50).

6. A pressure regulator (10) as claimed in claim 5, wherein the lever system comprises adjustment means (46, 48).

7. A pressure regulator (10) as claimed in claim 1, wherein the first and the second elastic means are helical springs (40, 76) disposed coaxial with the first (38) and with the second (74) elastic membrane.

8. A pressure regulator (10) as claimed in claims 1 and 4, wherein the valving element (56) of the second valve (54) is movable in a direction parallel to the deformation direction of the second elastic membrane (74).

9. A pressure regulator (10) as claimed in claim 1, wherein the outer face of the second elastic membrane (74) communicates (86) with the engine manifold.

10. A pressure regulator (10) as claimed in claim 1, wherein means (80, 82, 84) are provided for adjusting the preset of the second elastic means (76).

11. A pressure regulator (10) as claimed in claim 1, wherein a safety valve (90) is provided to connect the first chamber (52) to the outside if the gaseous fuel pressure in the first chamber (52) reaches a predetermined danger level.

12. A pressure regulator (10) as claimed in claim 1, wherein a heating circuit is provided to prevent formation of condensate and/or ice in the pressure reducer (10).

## Patentansprüche

1. Zweistufiger Druckregler (10) zum Zuführen eines gasförmigen Brennstoffs, der aus einem zugeordneten Tank entnommen wird, zu einer Brennkraftmaschine des Einspritztyps, in dem die erste Stufe eine erste Kammer (52) aufweist, die über ein erstes Ventil (22) in Verbindung mit dem Tank steht, wobei ein Teil der inneren Oberfläche der ersten Kammer (52) durch eine erste elastische Membran (38) gebildet ist, deren äußere Seite auf Atmosphärendruck ist, wobei auf die erste Membran (38) dort eine erste voreingestellte elastische Einrichtung (40) wirkt, wobei Einrichtungen (36, 32, 28, 30, 46, 48, 50) vorgesehen sind, um das erste Ventil (22) durch die Verformung der ersten Membran (38) zu steuern; wobei die zweite Stufe eine zweite Kammer (58) aufweist, die mit der ersten Kammer (52) über ein zweites Ventil (54) in Verbindung steht, wobei ein Teil der inneren Oberfläche der zweiten Kammer (58) durch eine zweite elastische Membran (74) gebildet ist, auf die eine zweite voreingestellte elastische Einrichtung (76) wirkt, wobei die zweite Kammer in zwei Teile geteilt ist, von denen der erste Teil (62) direkt mit dem Ausgang (68) des Reglers (10) verbunden ist und ebenfalls, über das zweite Ventil (54), mit der ersten Kammer (52), wobei der zweite Teil (64) der zweiten Kammer (58) teilweise durch die zweite elastische Membran (74) begrenzt wird, wobei die zwei Teile (62, 64) der zweiten Kammer (58) miteinander verbunden sind, **dadurch gekennzeichnet**, däss die Verbindung zwischen den zwei Teilen (62, 64) der zweiten Kammer (58) durch ein Rohr (66) gebildet ist, das sich von der Wand (63), durch die die zwei Teile (62, 64) getrennt sind, zu einer Position erstreckt, die der kreisförmigen Austrittsöffnung (68) des Reglers (10) entspricht, wobei das zugeordnete freie Ende des Rohres (66) einen äußeren Durchmesser hat, der kleiner als der innere Durchmesser der Austrittsöffnung (68) ist; wobei das erste Ventil (22) sich in Richtung des Brennstoffstroms öffnet, während das zweite Ventil (54) sich in zu dem Brennstoffstrom entgegengesetzter Richtung öffnet.

2. Druckregler, wie in Anspruch 1 beansprucht, wobei der innere Durchmesser des Rohres (66) zu seinem freien Ende zunimmt.

3. Druckregler, wie in Anspruch 2 beansprucht, wobei die Zunahme des inneren Durchmessers des Rohres (66) sprungartig an einem dazwischenliegenden Punkt davon auftritt.

4. Druckregler (10), wie in Anspruch 1 beansprucht, wobei die erste (38) und die zweite (74) Membran einander überdekkend angeordnet sind und in entsprechenden, im Wesentlichen parallelen Ebenen liegen, wobei die erste (52) und die zweite (54) Kammer in dem Raum zwischen den Ebenen der zwei Membrane (38, 74) angeordnet sind, wobei die zugeordneten, voreingestellten elastischen Einrichtungen (40, 76) außerhalb dieser Ebenen angeordnet sind, wobei das erste Ventil (22), dessen Ventilelement in einer Richtung, die im Wesentlichen parallel zu den Ebenen der zwei Membrane (38, 74) ist, beweglich ist, in dem Raum zwischen den zwei Ebenen liegt.

5. Druckregler (10), wie in den Ansprüchen 1 und 4 beansprucht, wobei die Einrichtungen zum Steuern des ersten Ventils (22) durch die Verformung der ersten elastischen Membran (38) ein Hebelsystem (36, 32, 28, 30, 50) umfassen.

6. Druckregler (10), wie in Anspruch 5 beansprucht, wobei das Hebelsystem eine Einstellungseinrichtung (46, 48) umfasst.

7. Druckregler (10), wie in Anspruch 1 beansprucht, wobei die erste und die zweite elastische Einrichtung Schraubenfedern (40, 76) sind, die koaxial mit der ersten (38) und mit der zweiten (74) elastischen Membran angeordnet sind.

8. Druckregler (10), wie in den Ansprüchen 1 und 4 beansprucht, wobei das Ventilelement (56) des zweiten Ventils (54) bewegbar in einer Richtung ist, die parallel zu der Richtung der Verformung der zweiten elastischen Membran (74) ist.

9. Druckregler (10), wie in Anspruch 1 beansprucht, wobei die äußere Fläche der zweiten elastischen Membran (74) mit dem Motor-Verteiler in Verbindung steht (86).

10. Druckregler (10), wie in Anspruch 1 beansprucht, wobei Einrichtungen (80, 82, 84) zum Einstellen der Voreinstellung der zweiten elastischen Einrichtung (76) vorgesehen sind.

11. Druckregler (10), wie in Anspruch 1 beansprucht, wobei ein Sicherheitsventil (90) vorgesehen ist, um die erste Kammer (52) mit dem Äußeren zu verbinden, wenn der Druck des gasförmigen Brennstoffs in der ersten Kammer (52) einen vorbestimmten Gefahrenpegel erreicht.

12. Druckregler (10), wie in Anspruch 1 beansprucht, wobei eine Heizschaltung vorgesehen ist, um die Bildung von Kondensat und/oder Eis in dem Druckminderer (10) zu verhindern.

## Revendications

1. Régulateur de pression à deux étages (10) permettant l'alimentation d'un moteur à combustion interne de type à injection avec du combustible gazeux prélevé d'un réservoir correspondant, dans lequel le premier étage comporte une première chambre (52) communiquant avec le réservoir par l'intermédiaire d'une première soupape (22), une partie de la surface intérieure de la première chambre (52) étant constituée par une première membrane élastique (38) ayant son côté externe soumis à la pression atmosphérique, des premiers moyens élastiques préréglés (40) agissent sur la première membrane (38), des moyens (36, 32, 28, 30, 46, 48, 50) étant prévus pour piloter la première soupape (22) par la déformation de la première membrane (38) ; le deuxième étage comprenant une deuxième chambre (58) communicant avec la première chambre (52) par l'intermédiaire d'une deuxième soupape (54), une partie de la surface intérieure de la deuxième chambre (58) étant constituée par une deuxième membrane élastique (74) sur laquelle agissent des seconds moyens élastiques préréglés (76), la deuxième chambre étant divisée en deux parties, la première partie (62) communiquant directement avec la sortie (68) du régulateur (10) et aussi, par l'intermédiaire de la deuxième soupape (54), avec la première chambre (52), la deuxième partie (64) de la deuxième chambre (58) étant en partie liée par la deuxième membrane élastique (74), les deux parties (62, 64) de la deuxième chambre (58) étant reliées ensemble, **caractérisé en ce que** la connexion entre les deux parties (62, 64) de la deuxième chambre (58) est faite par un tube (66) qui s'étend de la cloison (63) par lequel les dites deux parties (62, 64) sont divisées, à une position correspondant à l'ouverture circulaire de sortie (68) du régulateur (10), l'extrémité libre correspondante du tube (66) ayant un diamètre extérieur moindre que le diamètre intérieur de l'ouverture de sortie (68) ; la première soupape (22) s'ouvrant dans la direction d'écoulement de combustible, tandis que la deuxième soupape (54) s'ouvrant dans la direction opposée à l'écoulement de combustible.

2. Régulateur de pression selon la revendication 1, où le diamètre intérieur du tube (66) augmente vers son extrémité libre.

3. Régulateur de pression selon la revendication 2, où l'augmentation du diamètre intérieur du tube (66) se produit soudainement au droit d'un point intermédiaire.

4. Régulateur de pression (10) selon la revendication 1, où la première membrane (38) et deuxième membrane (74) sont superposées et se situent dans des plans essentiellement parallèles respectivement, avec la première chambre (52) et deuxième chambre (54) disposées dans l'espace compris entre les plans des deux membranes (38, 74), les moyens élastiques appliquant un effort relatif préétabli (40, 76) étant disposés en dehors de ces plans, la première soupape (22) ayant sa partie mobile évoluant dans une direction essentiellement parallèle aux plans des deux membranes (38, 74) et se trouvant dans l'espace situé entre lesdits deux plans.

5. Régulateur de pression (10) selon les revendications 1 et 4, où les moyens pour piloter la première soupape (22) par la déformation de la première membrane élastique (38) comportent un système à levier (36, 32, 28, 30, 50).

6. Régulateur de pression (10) selon la revendication 5, où le système à levier comporte des moyens de réglage (46, 48).

7. Régulateur de pression (10) selon la revendication 1, où les premiers moyens élastiques et les seconds moyens élastiques sont des ressorts hélicoïdaux (40, 76) disposés co-axialement avec la première membrane élastique (38) et avec la deuxième membrane élastique (74).

8. Régulateur de pression (10) selon les revendications 1 et 4, où l'élément obturant (56) de la deuxième soupape (54) est mobile dans une direction parallèle à la direction de déformation de la deuxième membrane élastique (74).

9. Régulateur de pression (10) selon la revendication 1, où la face externe de la deuxième membrane élastique (74) communique (86) avec l'admission du moteur.

10. Régulateur de pression (10) selon la revendication 1, où des moyens (80, 82, 84) permettent d'ajuster le préréglage des deuxièmes moyens élastiques (76).

11. Régulateur de pression (10) selon la revendication 1, où une soupape de sûreté (90) est prévue pour relier la première chambre (52) à l'extérieur si la pression de combustible gazeux dans la première chambre (52) atteint un niveau prédéterminé dangereux.

12. Un régulateur de pression (10) selon la revendication 1, où un circuit de chauffage est fourni pour empêcher la formation de condensât et/ou de glace dans le réducteur de pression (10).
